# EUROPÄISCHE PATENTANMELDUNG

(11) **EP 4 608 062 A1**
(43) Veröffentlichungstag der Anmeldung: **27.08.2025**
(21) Anmeldenummer: 25158522.0
(22) Anmeldetag: 18.02.2025
(51) Int. Cl.: H04W 84/06, F41G 7/00, F42B 15/01, H04W 84/18

(54) **VERFAHREN ZUM BETRIEB EINES LUFTKAMPFSYSTEMS**

(30) Priorität: 23.02.2024 DE 102024000581
(71) Anmelder: Diehl Defence GmbH & Co. KG, 88662 Überlingen (DE)
(72) Erfinder: Selz, Andre, 88662 Überlingen (DE); Freter, René, 88634 Herdwangen-Schönach (DE); Walzer, Martin, 88682 Salem (DE)
(74) Vertreter: Diehl Patentabteilung

(57) **Zusammenfassung**

Die Erfindung betrifft ein Verfahren zum Betrieb eines Luftkampfsystems (2), bei dem in einer einsatzfähigen Luftkampfeinheit (4, 4a-d) mehrere Dateneinheiten (16, 16a-f) über ein Systemnetzwerk (20) miteinander verbunden sind.

Um die Zuverlässigkeit der Zielführung eines Lenkflugkörpers (4a) zu verbessern, wird vorgeschlagen, dass mehrere Koppeleinheiten (30, 30a-g) eines zum Systemnetzwerk (20) zusätzlichen Datenpoolnetzwerks (26a-d) jeweils zumindest eine Dateneinheit (16, 16a-f) mit einem Datenkern (28) des Datenpoolnetzwerks (26a-d) verbinden.

## Beschreibung

Die Erfindung betrifft ein Verfahren zum Betrieb eines Luftkampfsystems, bei dem in einer einsatzfähigen Luftkampfeinheit mehrere Dateneinheiten über ein Systemnetzwerk miteinander verbunden sind.

Lenkflugkörper werden für verschiedene Aufgaben eingesetzt. Besonders bedeutsam ist die Boden-Luft-Bekämpfung von anfliegenden Angriffsflugkörpern. Aber auch die Boden-Boden-Bekämpfung von Fahrzeug zu Fahrzeug, z.B. von Schiff zu Schiff, über große Distanzen ist ein Aufgabengebiet von Lenkflugkörpern. Hierbei wird ein Lenkflugkörper auf ein für ihn nicht sichtbares Ziel eingewiesen und er wird gestartet. Der Lenkflugkörper fliegt anhand der Einweisung in Richtung auf sein Ziel, bis das Ziel in seinem Suchkopf sichtbar wird und die Navigation durch den Suchkopf gesteuert werden kann. Kritisch ist das Bekämpfen schneller und agiler Ziele, die vor dem Lenkflugkörper ausweichen noch bevor sie im Suchkopf sichtbar werden. Der Lenkflugkörper fliegt weit am eingewiesenen Ziel vorbei, ohne die Chance zu haben, das Ziel zu erreichen. Dieses Problem kann abgemildert werden, wenn das Ausweichen des Ziels von einem Radar verfolgt und dem Lenkflugkörper die Ausweichtrajektorie oder neue Zieldaten über einen Datenlink zugeschickt werden, sodass der Lenkflugkörper der Ausweichbewegung folgen kann. Hierfür ist jedoch erstens eine Verfolgung des Ziels durch eine unterstützende Einheit und zweitens ein zuverlässiger Datenlink notwendig.

Es ist eine Aufgabe der vorliegenden Erfindung, ein Verfahren zum Betrieb eines Luftkampfsystems anzugeben, mit dem die Zuverlässigkeit der Zielführung eines Lenkflugkörpers verbessert werden kann.

Diese Aufgabe wird durch ein Verfahren der eingangs genannten Art gelöst, bei dem erfindungsgemäß mehrere Koppeleinheiten eines zum Systemnetzwerk zusätzlichen Datenpoolnetzwerks jeweils zumindest eine Dateneinheit mit einem Datenkern des Datenpoolnetzwerks verbinden.

Die Erfindung geht von der Überlegung aus, dass die Zuverlässigkeit der Zielführung gesteigert werden kann, wenn Zieldaten von anderen Systemen zur Verfügung stehen. Bisher begrenzen die üblichen Datenverbindungen zu einer Luftkampfeinheit, wie Link 16 oder Missile-2-Missile, die Kommunikation mit der Luftkampfeinheit auf den konkreten Kommunikationspartner, der ggf. nicht über die notwendige Information über das Ziel in ausreichender Genauigkeit oder Schnelligkeit verfügt. Auch in Luftkampfeinheiten selbst ist die Kommunikation zwischen Dateneinheiten in Legacy-Systemen zumeist linear gestaltet, sodass zwar eine hohe Sicherheit der Kommunikation gegen Störung erreicht wird, jedoch auf Kosten der Informationsdichte.

Diese Probleme können mit der Erfindung überwunden werden. Mit dem zum Systemnetzwerk zusätzlichen Datenpoolnetzwerk wird ein Zweischichtensystem aufgebaut, in dem die Datensicherheit im Systemnetzwerk nicht beeinträchtigt werden muss und durch das Datenpoolnetzwerk zusätzliche Informationen bereitgestellt werden können. Die Dateneinheiten können sich über ihre Koppeleinheiten und dem mit ihnen verbundenen Datenkern austauschen, sodass ein über das Systemnetzwerk hinausgehender Datenpool geschaffen werden kann. Da das Systemnetzwerk mit seinen angeschlossenen Dateneinheiten nicht verändert werden muss, können auch Legacy-Systeme leicht mit der Erfindung nachgerüstet werden.

Die Luftkampfeinheit ist mit dem Systemnetzwerk und den daran angeschlossenen Dateneinheiten vollständig einsatzbereit. Es kann hier von einer Luftkampfeinheit ausgegangen werden, die auch ohne das Datenpoolnetzwerk vollständig einsatzbereit ist. In dieser Luftkampfeinheit stehen über das Systemnetzwerk alle Informationen zur Verfügung, die für die übliche Einsatzbereitschaft notwendig sind, also die Luftkampfeinheit zu erfolgreichen Einsätzen befähigen, für die sie geschaffen ist. Das Systemnetzwerk der Luftkampfeinheit stellt die untere Netzwerkschicht dar, die die Luftkampfeinheit vollständig einsatzbereit macht. Diese muss durch das zusätzliche Datenpoolnetzwerk nicht beeinträchtigt werden. Das Datenpoolnetzwerk kann insofern zu der üblichen und einsatzbereiten Luftkampfeinheit hinzu- bzw. in diese hineinkommen, beispielsweise als obere Netzwerkschicht. Mit dem Datenpoolnetzwerk können daher zusätzliche Informationen bereitgestellt werden, und dies, ohne dass die Datensicherheit im Systemnetzwerk und damit der Luftkampfeinheit an sich beeinträchtigt werden muss. Es ist zwar grundsätzlich möglich, das Systemnetzwerk teilweise durch das Datenpoolnetzwerk zu ersetzen, doch dies ist nicht notwendig und zum Erhalt der Datensicherheit auch nicht vorteilhaft. Mit der Information aus dem Datenpoolnetzwerk können eine oder mehrere Dateneinheiten der Luftkampfeinheit mit zusätzlichen Informationen versorgt werden, sodass deren Funktion verbessert werden kann. Die zusätzlichen Informationen bzw. Daten können solche sein, die vom Systemnetzwerk ohne das Datenpoolnetzwerk nicht geliefert werden können. Zweckmäßigerweise sind alle Dateneinheiten über das Datenpoolnetzwerk miteinander vernetzt. Ein Datenaustausch zwischen den Dateneinheiten kann durch den Datenkern gesteuert werden. Da keine lineare Vernetzung von aufeinander abgestimmten Dateneinheiten notwendig ist, kann das Datenpoolnetzwerk zudem sehr leicht verändert und/oder um weitere Dateneinheiten erweitert werden.

Das Luftkampfsystem beinhaltet in einer einfachen Variante der Erfindung eine einzige Luftkampfeinheit, kann jedoch auch mehrere Luftkampfeinheiten umfassen, die miteinander vernetzt sind. Die Luftkampfeinheit kann ein Lenkflugkörper oder allgemeiner: ein unbemanntes Fluggerät sein, wie eine Drohne oder ein gelenktes Artilleriegeschoss. Die Luftkampfeinheit kann sich mit anderen Luftkampfeinheiten vernetzen, wie einem oder mehreren der folgenden Einheiten: unbemanntes Fluggerät, Flugzeug, Satellit, Boden- oder Seefahrzeug, Kommandozentrale, Kommunikationszentrale, Gefechtsstand, Aufklärungseinheit und/oder Radar.

Die Dateneinheiten können Daten generierende Einheiten in einer Luftkampfeinheit sein, wie ein Sensor, ein Radar, ein Suchkopf, ein Effektor, eine Flugsteuerung, eine Schussbereichsberechnung, eine Freund-Feind-Erkennung, eine Fernkommunikationseinheit, z.B. zur Vernetzung mit anderen Systemen, eine zentrale Steuereinheit und/oder ein anderer Datenservice oder Datendienst, wie eine Rechner mit Fusionsalgorithmen zur Datenfusion.

Das Datenpoolnetzwerk beinhaltet den Datenkern und die Koppeleinheiten, die wie ein Ring zum Datenkern sein können, der zentriert mit den Koppeleinheiten verbunden ist. Die Dateneinheiten sind zweckmäßigerweise solche, die in der Luftkampfeinheit auch ohne das Datenpoolnetzwerk vorhanden sind. Die Dateneinheiten sind insofern sowohl mit dem Systemnetzwerk als auch mit dem Datenpoolnetzwerk datentechnisch verbunden. Möglich sind auch zusätzliche Dateneinheiten, die nur mit dem Datenpoolnetzwerk verbunden sind. Die Dateneinheiten können einen äußeren Ring des Datenpoolnetzwerks bilden, wobei die Koppeleinheiten den inneren Ring bilden. Jede Dateneinheit ist mit einer Koppeleinheit verbunden, wobei eine 1:1-Verbindung bestehen kann, oder es sind zwei oder mehr identische Dateneinheiten oder Dateneinheiten der gleichen Art mit einer Koppeleinheit verbunden.

Vorteilhafterweise erfüllen die Koppeleinheiten zumindest zwei Funktionen: Sie bilden eine Schnittstelle zwischen ihrer oder ihren Dateneinheiten und dem Datenpoolnetzwerk. Und sie bilden Adapter, die die Kommunikation ihrer Dateneinheit/-en an eine zentrale Kommunikation des Datenkerns anpassen. Sie können beispielsweise ein dateneinheitsspezifisches Protokoll an das Protokoll des Datenkerns anpassen. Dadurch muss nur die Koppeleinheit an ihre Dateneinheit angepasst werden und der Datenkern ist universell verwendbar, also für beliebige Dateneinheiten. Die Koppeleinheit kann eine Interface Adapter Box sein, also eine Hardware mit Software, die individuell an ihre Dateneinheit angepasst ist. Die Anpassung umfasst zweckmäßigerweise auch die Information, welche Daten ihre Dateneinheit liefern kann und brauchen kann. Zweckmäßigerweise kann eine Koppeleinheit Daten von ihrer Dateneinheit abgreifen. Dies können Daten sein, die von ihrer Dateneinheit ins Systemnetzwerk gegeben werden. Die Koppeleinheit kann diese Daten an den Datenkern weitergeben, zweckmäßigerweise in vom Inhalt her unveränderter Form. Die Daten können alternativ in einer veränderten Form an den Datenkern gegeben werden, beispielsweise als Protokoll oder Information an den Datenkern, welche Daten vorhanden sind. Die Daten an sich müssen dabei nicht übermittelt werden, wodurch der Datenverkehr im Datenpoolnetzwerk reduziert werden kann.

Wie beschrieben, ist in einer vorteilhaften Ausführungsform der Erfindung die Einsatzfähigkeit der Luftkampfeinheit durch den Datenaustausch im Systemnetzwerk vorhanden und das Datenpoolnetzwerk liefert zusätzliche und ergänzende Daten an zumindest eine Dateneinheit. Zusätzlich kann in diesem Zusammenhang bedeuten, dass die zusätzlichen Daten im Systemnetzwerk außerhalb der Dateneinheiten nicht vorliegen bzw. nicht ausgetauscht werden oder werden können. Diese zusätzlichen Daten können in der Weise gekennzeichnet sein, dass der die zusätzlichen oder ergänzenden Daten empfangenden Koppeleinheit und/oder Dateneinheit bekannt ist, dass diese Daten nicht aus dem Systemnetzwerk kommen. Die empfangende Dateneinheit kann die zusätzlichen Daten verwerfen oder ignorieren, sodass hierdurch eine Beeinträchtigung der Funktion des Luftkampfsystems durch das Datenpoolnetzwerk noch sicherer vermieden werden kann.

Zumindest eine der Koppeleinheiten - im Folgenden verkürzt mit "die Koppeleinheit" angegeben - kann Daten abgreifen, die zwischen dem Systemnetzwerk und der Dateneinheit ausgetauscht werden. Zum Abgreifen der Daten kann die Koppeleinheit in einer Datenverbindung, insbesondere einer Datenleitung zwischen ihrer Dateneinheit und dem Systemnetzwerk, angeordnet sein, beispielsweise in Form einer Hardwareschnittstelle in der Datenverbindung zwischen der Dateneinheit und dem Systemnetzwerk. Alternativ oder zusätzlich ist es möglich, dass die Koppeleinheit ein Teilnehmer eines Bussystems des Systemnetzwerks ist. Weiter ist es möglich, dass die Dateneinheit mit einer Hardwareschnittstelle ausgerüstet ist, mit der die Koppeleinheit verbunden ist und darüber im Datenverkehr mit der Dateneinheit steht. Die Hardwareschnittstelle kann identisch sein mit einer Hardwareschnittstelle, mit der die Dateneinheit mit dem Systemnetzwerk verbunden ist, oder sie kann eine zusätzliche Hardwareschnittstelle sein, über die die Dateneinheit mit dem Datenpoolnetzwerk verbunden ist, zweckmäßigerweise nicht aber mit dem Systemnetzwerk. Den Datenverkehr zwischen der Dateneinheit und dem Systemnetzwerk belässt die Koppeleinheit zweckmäßigerweise unverändert.

Die Koppeleinheit kann ihrer Dateneinheit Daten vom Datenkern liefern, zweckmäßigerweise solche, die im Systemnetzwerk nicht zur Verfügung stehen. Das Einspeisen von Daten aus dem Datenpoolnetzwerk zur Dateneinheit kann in der Weise erfolgen, dass die Koppeleinheit im Datenverkehr zwischen ihrer Dateneinheit und dem Systemnetzwerk als solche sichtbar oder aber unsichtbar ist. Bei der Unsichtbarkeit wird der Dateneinheit vorgegeben, dass die durch die Koppeleinheit eingespeisten Daten vom Systemnetzwerk kommen. Der Vorteil dieser Variante liegt darin, dass die Dateneinheit nicht verändert werden muss und es nicht zwischen Daten aus dem Datenpoolnetzwerk und dem Systemnetzwerk unterscheiden muss.

Damit zusätzliche Daten an eine Dateneinheit geliefert werden können, die diese Daten in für eine Mission vorteilhafter Weise verarbeiten kann, müssen die Daten erhoben werden und sie müssen an die Dateneinheit gegeben werden. Es muss also bekannt sein, welche Dateneinheit welche Daten liefern kann und welche Dateneinheit zur Verfügung stehenden Daten gebrauchen könnte. Das Sammeln und Weiterleiten der Daten wird vom Datenpoolnetzwerk vorgenommen. Hierzu gibt es im Datenpoolnetzwerk drei mögliche Aktivitätsräume: den Datenkern, die Koppeleinheiten und deren Dateneinheiten. Welche Daten zur Verfügung stehen, kann der Dateneinheit, von der die Daten stammen, bekannt sein, und die Dateneinheit kann dazu vorbereitet sein, diese Daten in ihr Systemnetzwerk zu geben. Diese Daten können dann von ihrer Koppeleinheit abgegriffen und an den Datenkern weitergegeben werden. In einer zweiten Variante ist der Koppeleinheit bekannt, welche Daten ihre Dateneinheit erzeugt. Die Koppeleinheit fordert diese Daten von ihrer Dateneinheit an und leitet sie an den Datenkern weiter. In einer dritten Variante ist dem Datenkern bekannt, welche Daten mit dem Datenpoolnetzwerk verbundene Dateneinheiten erzeugen. Der Datenkern fordert diese Daten von der betreffenden Koppeleinheit und diese von ihrer Dateneinheit an und leitet sie an den Datenkern weiter. Je nach Dateneinheiten und Koppeleinheiten können eine oder mehrere Varianten im Datenpoolnetzwerk nebeneinander ausgeführt werden, beispielsweise liefert eine Dateneinheit selbständig Daten, bei einer anderen fordert die Koppeleinheit die Daten an und/oder bei einer dritten Dateneinheit fordert der Datenkern deren Daten an, insbesondere nur bei Bedarf nach diesen Daten an einer anderen Stelle.

In gleicher Weise kann die Datenverteilung erfolgen. In einer ersten Variante fordert die Dateneinheit Daten an, die ihre eigene Aktivität verbessern. In einer zweiten Variante liegen der Koppeleinheit Informationen vor, welche Daten die Aktivität ihrer Dateneinheit verbessert, sie liefert sie an ihre Dateneinheit, ggf. nachdem sie sie vom Datenkern angefordert hat. In einer dritten Variante liegen dem Datenkern Informationen vor, welche Daten die Aktivität einer ans Datenpoolnetzwerk angeschlossenen Dateneinheit verbessert. Der Datenkern liefert diese Daten an die betreffende Koppeleinheit bzw. darüber an die Dateneinheit. Auch hier können eine oder mehrere Varianten im Datenpoolnetzwerk nebeneinander ausgeführt werden, beispielsweise fordert eine Dateneinheit selbständig Daten an, bei einer anderen fordert die Koppeleinheit die Daten vom Datenkern an und/oder bei einer dritten Dateneinheit weiß der Datenkern deren Datenbedarf und liefert diese Daten.

Zusammengefasst ist dem Datenpoolnetzwerk bzw. einem Teil davon, wie einem System darin aus Datenkern, einer Koppeleinheit und/oder ihrer Dateneinheit, bekannt, welche Daten für eine Dateneinheit vorteilhaft sind und die Daten werden im System an die Dateneinheit geliefert, wenn sie dem System zur Verfügung stehen. Die Datenverteilung kann selbständig erfolgen, also ohne explizite Anforderung, oder reaktiv auf eine Anforderung reagierend. Eine selbständige Datenweitergabe kann erfolgen, indem der Datenkern Daten, die ihm von einer Koppeleinheit zur Verfügung stehen, erfasst und selbständig an eine andere Koppeleinheit weitergibt, die bzw. deren Dateneinheit Bedarf an diesen Daten hat.

Um den Datenverkehr im Datenpoolnetzwerk gering zu halten, ist es vorteilhaft, wenn die Koppeleinheit die ihr von der Dateneinheit zur Verfügung stehenden Daten erfasst und Metadaten der Daten erzeugt. Die Metadaten können gesammelt werden. Beispielsweise kann die Koppeleinheit anstelle der konkreten Daten der Auffassreichweite oder Bekämpfungsreichweite die Metadaten erzeugen, dass Daten zur Auffassreichweite oder Bekämpfungsreichweite über einen bekannten Zeitraum vorliegen. Die Metadaten können an den Datenkern gesendet werden, der mit diesem Vorgehen die Kenntnis erlangt, das diese Daten in der Koppeleinheit vorliegen, und - wenn mehrere oder alle Koppeleinheiten des Datenpoolnetzwerk diese Information weitergeben - welche Daten wo im Datenpoolnetzwerk vorliegen. Kurz, kann die Koppeleinheit den Datenkern über die ihm von der Dateneinheit zur Verfügung stehenden Daten informieren, ohne dass diese Daten von der Koppeleinheit an den Datenkern gesendet werden.

Wenn von einer erste Koppeleinheit oder ihrer Dateneinheit Daten beim Datenkern angefordert werden und diese Daten im Datenpoolnetzwerk zur Verfügung stehen, so kann der Datenkern die angeforderten Daten von einer anderen Koppeleinheit einholen und diese zur ersten Koppeleinheit weitergeben. Weiß der Datenkern, welche Daten von welcher Dateneinheit benötigt werden und dass diese Daten im Datenpoolnetzwerk vorliegen, so kann der Datenkern diese Daten selbständig von der anderen Koppeleinheit zu ersten Koppeleinheit leiten.

Es ist auch vorteilhaft, wenn eine Einheit im Datenpoolnetzwerk eine Dateneinheit auffordert, solche Daten zu erzeugen, die die Dateneinheit dem Systemnetzwerk ohne diese Aufforderung nicht bereitgestellt hätte. Beispielsweise kann ein Suchkopf oder ein Radar aufgefordert werden, in eine vorgegebene Richtung zu schauen, beispielsweise um ein Objekt zu erkennen, das der Suchkopf von sich aus nicht optisch erfasst hätte. Dieses Objekt ist ggf. für eine andere Dateneinheit von Interesse. Funktionen können auf diese Weise auch für eine andere Dateneinheit genutzt werden. Die Aufforderung kann von der Koppeleinheit der Dateneinheit kommen oder direkt vom Datenkern an die Koppeleinheit und von dort an die Dateneinheit oder direkt an die Dateneinheit.

Eine weitere Aufgabe des Datenkerns kann sein, das Schnittstellenmanagement im Datenpoolnetzwerk auszuführen. Hierzu kann der Datenkern die gesamte Kommunikation innerhalb des Teils des Datenpoolnetzwerks vom Datenkern bis zu allen Koppeleinheiten steuern. Beispielsweise kann der Datenkern die Kommunikation im Datenpoolnetzwerk zwischen mehreren Koppeleinheiten und ggf. auch Dateneinheiten koordinieren und neue Dateneinheiten im Datenpoolnetzwerk registrieren. Auch die Entscheidung, ob und/oder wann eine vernetzbare Dateneinheit dem Datenpoolnetzwerk hinzugefügt wird, kann durch den Datenkern getroffen werden.

Auch kann der Datenkern das sogenannte Publish-Subscribe-Prinzip anwenden: Es werden aus der Masse der verfügbaren Daten nur die explizit angefragten Daten verschickt, wodurch die verschickte Datenmenge und damit die Latenz des Datenpoolnetzwerks verringert wird.

Eine weitere Ausführungsform der Erfindung sieht vor, dass der Datenkern eine Priorisierung der Nachrichten innerhalb des Datenpoolnetzwerks vornimmt, insbesondere auf einem Bus eines Datenpoolnetzwerks, beispielsweise nach Dringlichkeit, sodass eine zügige Leitung von dringlichen Informationen im Netzwerk erreicht wird. Die Priorisierung kann anhand von Header-Information innerhalb der Nachrichtenstruktur, z.B. Flags, erfolgen. Hierbei ist es besonders vorteilhaft, wenn die vom Datenpoolnetzwerk an eine Dateneinheit gegebenen Daten niedriger priorisiert sind als die aus dem Systemnetzwerk an die Dateneinheit gegebenen Daten. Auch diese Priorisierung kann vom Datenkern ausgeführt werden und wie beschrieben gekennzeichnet sein. Hierdurch bleibt die Kommunikation innerhalb des Systemnetzwerks zumindest weitgehend unbeeinflusst von der Kommunikation innerhalb des Datenpoolnetzwerks.

Ferner kann der Datenkern alle auszutauschenden Nachrichten durch Prüfsummen schützen, sodass innerhalb des Netzwerks eine Integritätsfunktionalität besteht. Diese Funktionalität kann auch über die Netzwerksgrenzen hinaus Anwendung finden, z.B. wenn mehrere Datenpoolnetzwerke miteinander vernetzt sind.

Weiter ist es vorteilhaft, wenn die Koppeleinheit zwischen ihrer Dateneinheit und dem Datenkern ausgetauschte Daten anpasst. Die Anpassung kann eine Anpassung im Protokoll sein, in der verwendeten Sprache, der Nachrichtenstruktur, von Datenformaten und/oder von Nachrichteninhalten. Diese Anpassung bzw. Übersetzung erfolgt zweckmäßigerweise in beide Richtungen. Die Koppeleinheit übersetzt die Daten aus dem Außenbereich des Datenpoolnetzwerks in eine einheitliche Form des Innenbereichs des Datenpoolnetzwerks und zurück. Der Außenbereich ist der Bereich von den Dateneinheiten bis zu den Koppeleinheiten und der Innenbereich ist der Bereich vom Datenkern bis zu den Koppeleinheiten. Die Koppeleinheiten können Teil des Innenbereichs und des Außenbereichs sein.

Beim Betrieb eines Luftkampfsystems werden in der Luftkampfeinheit und/oder im Datenverkehr von und zu der Luftkampfeinheit nicht selten geheim zu haltende Daten verarbeitet. Diese aus dem sicheren Systemnetzwerk in das Datenpoolnetzwerk zu bringen, kann noch tolerierbar sein, da auch dieses zunächst in z.B. der Luftkampfeinheit abgeschlossen ist. Kritisch ist jedoch eine Verteilung von geheim zu haltende Daten nach außerhalb des Datenpoolnetzwerks. Da sich ein Datenpoolnetzwerk unter Umständen mit anderen Datenpoolnetzwerken vernetzen kann, sollte innerhalb desjenigen Datenpoolnetzwerks, aus dessen Systemnetzwerk die geheim zu haltende Daten stammen, eine Erkennung der Daten als geheim zu halten erfolgen und die Verteilung nach außerhalb des Datenpoolnetzwerks verhindert werden. Um das zu erreichen, ist es vorteilhaft, wenn der Datenkern bei ihm vorliegende Daten auf eine Klassifizierung zur Geheimhaltung prüft. Liegt eine solche Klassifizierung zur Geheimhaltung vor, kann der Datenkern diese Daten nach Geheimhaltungsregeln behandeln. Beispielsweise beschränkt der Datenkern eine Weitergabe von klassifizierten Daten auf vorbestimmte Dateneinheiten. Eine solche Blockade der Weitergabe kann eine Weitergabe nach außerhalb des Datenpoolnetzwerks betreffen und/oder eine Weitergabe an einige oder alle anderen Dateneinheiten innerhalb des Datenpoolnetzwerks als derjenigen, von dem die klassifizierten, also geheim zu haltenden Daten stammen.

In einer anderen vorteilhaften Ausführungsform der Erfindung weist das Datenpoolnetzwerk eine Dateneinheit in Form einer Fernkommunikationseinheit auf. Auch die Fernkommunikationseinheit ist zweckmäßigerweise über eine ihr zugeordnete Koppeleinheit mit dem Datenkern verbunden. Diese Fernkommunikationseinheit kann mit der Funktionalität ausgestattet sein, eine Erreichbarkeit einer Fernkommunikationseinheit eines anderen Datenpoolnetzwerks zu erkennen, beispielsweise einer Fernkommunikationseinheit einer weiteren Luftkampfeinheit des Luftkampfsystems, und sich mit dieser zu vernetzen. Auf diese Weise kann eine Fernkommunikation zwischen beiden Datenpoolnetzwerken, z.B. zwischen zwei Luftkampfeinheiten, gebildet werden. Eine solche Fernvernetzung erfolgt vorzugsweise über eine kabellose Datenverbindung, wie eine Funkverbindung.

Eine solche Fernvernetzung zwischen Datenpoolnetzwerken zweier Luftkampfeinheiten kann während eines Flugs von zumindest einer der Luftkampfeinheiten veranlasst werden, sodass Daten zwischen den beiden Datenpoolnetzwerken während des Flugs ausgetauscht werden. Eine solche Fernvernetzung kann insofern "on-the-fly" vorgenommen werden, also während des Flugs der Luftkampfeinheit wenn die andere Luftkampfeinheit erreichbar ist. Die Vernetzung kann von zumindest einem der Datenkerne der Datenpoolnetzwerke veranlasst werden. Ob eine solche Fernvernetzung vorgenommen wird, kann von mehreren Faktoren abhängig gemacht werden, von denen zweckmäßigerweise keiner negativ sein darf. Ein Faktor ist die Machbarkeit der Vernetzung. Die Machbarkeit ist abhängig von der Stärke des Datensignals und von der Kompatibilität der Kommunikation der beiden Fernkommunikationseinheiten. Besteht die technische Möglichkeit, dass sich die beiden Fernkommunikationseinheiten zum Datenaustausch vernetzen, liegt die Machbarkeit vor. Ein weiterer Faktor ist die Latenz. Ist diese zu groß für eine sinnvolle Vernetzung, kann von dieser abgesehen werden. Ein dritter Faktor ist die Zustimmung eines oder beider Datenkerne zu dieser Vernetzung. Meldet die Fernkommunikationseinheit eine Möglichkeit zur Vernetzung, entscheidet ihr Datenkern, ob er einer Vernetzung zustimmt. Ist die Fernkommunikationseinheit der anderen Luftkampfeinheit auch Teil eines Datenpoolnetzwerks mit einem Datenkern, so ist die Zustimmung dieses Datenkerns zur Vernetzung ein viertes Kriterium.

Sind zwei oder mehr Luftkampfeinheiten miteinander vernetzt, können Daten ausgetauscht werden. Verfügt die entfernte Luftkampfeinheit ebenfalls über ein Datenpoolnetzwerk mit einem Datenkern und zumindest einer Koppeleinheit, über die zumindest eine Dateneinheit mit dem Datenkern verbunden ist, können die Daten von Datenkern zu Datenkern gegeben werden. Die Datenkerne können diese Daten so behandeln, als kämen die Daten intern aus dem eigenen Datenpoolnetzwerk. Oder aber die Daten werden - z.B. aus Sicherheitsgründen - in anderer Weise behandelt als Daten, die innerhalb des Datenpoolnetzwerks erzeugt wurden. Die Fernkommunikationseinheit der entfernten Luftkampfeinheit kann als Dateneinheit gesehen werden, die insbesondere über eine Koppeleinheit mit dem Datenkern des Datenpoolnetzwerks der entfernten Luftkampfeinheit verbunden ist.

Bei einer Vernetzung zweier Datenpoolnetzwerke, insbesondere aus zwei entfernten voneinander operierenden Luftkampfeinheiten, ist es vorteilhaft, wenn der Datenkern Daten von einer seiner Dateneinheiten an einen Datenkern der weiteren Luftkampfeinheit weitergibt und dieser die Daten an eine Dateneinheit seines Datenpoolnetzwerks weitergibt. Auf diese Weise können die Daten von Dateneinheiten beider Datenpoolnetzwerke untereinander weitergegeben werden.

Um eine Fernvernetzung zwischen zwei Datenpoolnetzwerken auch über große Distanzen und/oder in schwer erreichbare Gebiete zu ermöglichen, kann man sie über ein drittes Datenpoolnetzwerk als Relaisstation führen. Es ist insofern vorteilhaft, wenn sich zwei Luftkampfeinheiten jeweils über ihre Fernkommunikationseinheit mit einem mittleren Datenpoolnetzwerk vernetzen, das als Relaisstation zwischen den beiden Luftkampfeinheiten dient. Das mittlere Datenpoolnetzwerk kann ein oder mehrere Fernkommunikationseinheiten aufweisen, über die die Fernkommunikation mit den beiden äußeren Datenpoolnetzwerken aufgebaut wird. Die Fernkommunikationseinheit kann eine Dateneinheit sein, die über eine Koppeleinheit mit einem Datenkern des mittleren Datenpoolnetzwerks verbunden ist.

Bei einem Datenaustausch ist die zur Verfügung stehende Bandbreite, also das übertragbare Datenvolumen pro Zeit, ein wichtiger Kommunikationsfaktor. Wenn die Dateneinheiten eines Datenpoolnetzwerks alle per Kabel mit ihren Koppeleinheiten und darüber mit dem Datenkern verbunden sind, ist die Bandbreite in der Regel kein Problem, wenn die Koppeleinheiten und der Datenkern jeweils eine ausreichend schnelle Datenverarbeitung haben. Bei der Fernvernetzung zweier Datenpoolnetzwerke kann jedoch eine geringe Bandbreite zwischen den Datenpoolnetzwerken bestehen und damit eine hohe Latenz in der Datenübermittlung. Es ist daher vorteilhaft, wenn vom Datenkern eine Bandbreite oder Latenz einer Datenverbindung erfasst wird und eine Priorisierung eines Datenversands die Bandbreite bzw. Latenz einbezieht. Generell besteht die Möglichkeit, dass der Datenkern die Bandbreite und/oder Latenz zu allen Koppeleinheiten bzw. den dahinterliegenden Dateneinheiten kennt. Die Daten zum Versand an die Dateneinheiten können, z.B. mit Flag-Informationen, priorisiert werden, sodass ein Versand nach Priorität erfolgen kann und damit eine Latenz im Datenaustausch hoch priorisierter Daten gering gehalten wird. Möglich ist es auch, dass die Güte der zu übertragenden Daten an die Bandbreite angepasst wird. Diese Prozesse können ohne jeglichen Eingriff in das Systemnetzwerk und damit in die einsatzfähige Luftkampfeinheit erfolgen.

Besteht die Möglichkeit, eine Kommunikation zu einem entfernten Datenpoolnetzwerk über mehrere Datenverbindungen herzustellen, so ist es vorteilhaft, wenn der Datenkern aus mehreren möglichen Datenverbindungen zu einem weiteren Datenpoolnetzwerk einer weiteren Luftkampfeinheit unter Berücksichtigung von Bandbreiten oder Latenzen der möglichen Datenverbindungen eine Datenverbindung aussucht. Zum Beispiel sucht ein Datenkern aus mehreren Datenverbindungen über verschiedene Relaisstationen den geeignetsten Datenweg, insbesondere denjenigen mit der größten Bandbreite, aus.

Die Erfindung ist außerdem gerichtet auf ein Luftkampfsystem umfassend eine Luftkampfeinheit mit mehreren Dateneinheiten und einem Systemnetzwerk, über das die Dateneinheiten untereinander verbunden sind zur Herstellung der Einsatzfähigkeit der Luftkampfeinheit.

Um eine große Zuverlässigkeit der Zielführung eines Lenkflugkörpers zu erreichen, enthält die Luftkampfeinheit ein zum Systemnetzwerk zusätzliches Datenpoolnetzwerk mit einem Datenkern und mehreren Koppeleinheiten, über die zumindest jeweils eine Dateneinheit mit dem Datenkern verbunden ist. Aus dem Datenpoolnetzwerk können zumindest einer der Dateneinheiten Informationen zugeführt werden, die zusätzlich zu denjenigen sind, die die Dateneinheit ohne das Datenpoolnetzwerk aus dem Systemnetzwerk erhalten würde. Die Luftkampfeinheit kann eine unbemannte fliegende Einheit sein, wie ein Lenkflugkörper, ein lenkbares Geschoss, eine Drohne oder eine bemannte Einheit, wie ein Flugzeug, oder eine rollende oder schwimmende Einheit, oder eine stationäre Zentrale, wie eine Leitstelle oder ein stationäres Radar.

Zumindest eine der Koppeleinheiten kann in Form einer Hardwareschnittstelle in einer Datenverbindung zwischen der Dateneinheit und dem Systemnetzwerk angeordnet sein. Alternativ oder zusätzlich können die Koppeleinheiten Teilnehmer eines Bussystems des Systemnetzwerks sein. Auch eine Hardwareschnittstelle in der Dateneinheit zum Anschluss an die Koppeleinheit ist möglich.

Ein weiterer Vorteil dieser Architektur besteht darin, dass selbst in Betrieb befindliche Legacy-Systeme ohne großen Aufwand mit dem Datenpoolnetzwerk nachgerüstet werden können. Zum Nachrüsten einer Kampfeinheit mit dem Datenpoolnetzwerk ist es vorteilhaft, wenn die Koppeleinheiten und der Datenkern in Form einer gegenständlich zusammengefassten Einheit in der Luftkampfeinheit angeordnet sind. Die Koppeleinheiten können mit einer Hardwareschnittstelle der Dateneinheit verbunden sein. Beispielsweise sind sie jeweils in die Datenverbindung von ihren Dateneinheiten zum Systemnetzwerk eingebracht.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: ein Luftkampfsystem mit mehreren miteinander vernetzten Luftkampfeinheiten,
- FIG 2: mehrere Dateneinheiten einer Luftkampfeinheit, die über ein Systemnetzwerk und über ein Datenpoolnetzwerk miteinander vernetzt sind, und
- FIG 3: miteinander vernetzte Datenpoolnetzwerke der Luftkampfeinheiten des Luftkampfsystems.

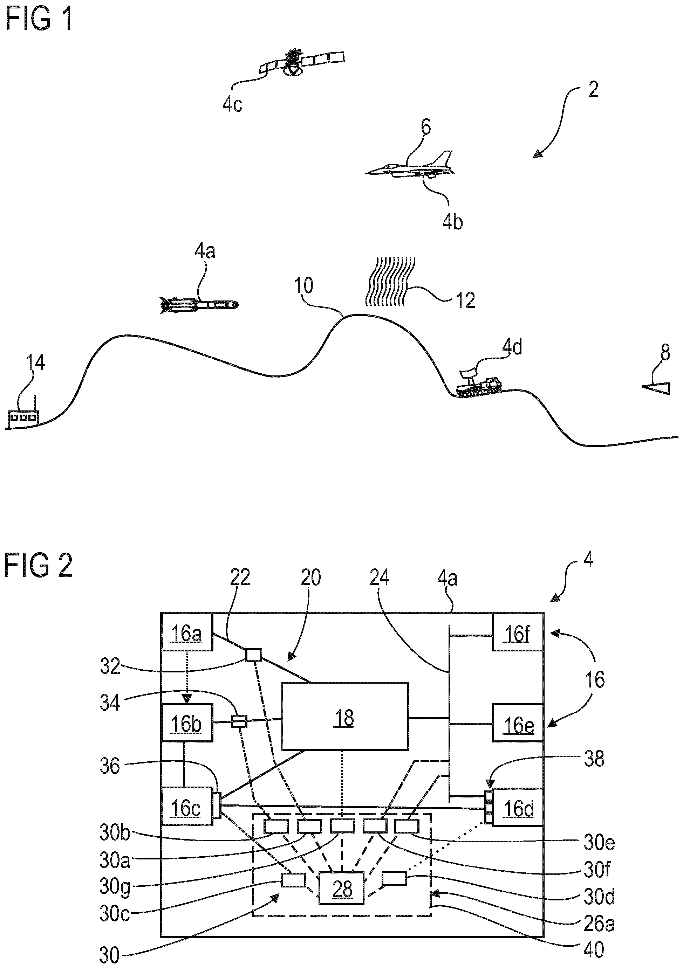

FIG 1 zeigt ein Luftkampfsystem 2 umfassend einen selbständig fliegenden Lenkflugkörper 4a, einen an einem fliegenden Flugzeug 6 hängenden Lenkflugkörper 4b, einen Satelliten 4c und ein Radar 4d. Diese Einheiten werden im Folgenden jeweils als Luftkampfeinheit 4 bezeichnet, wobei der Bezugszeichenbuchstabe der Einfachheit halber weggelassen wird. Der selbständig fliegende Lenkflugkörper 4a ist auf ein Ziel 8 eingewiesen, das er bekämpfen soll. Das Ziel 8 ist ein fliegendes Luftziel, beispielsweise eine Hyperschalllenkwaffe während ihres Flugs in Richtung auf ein unbekanntes Ziel. Der Lenkflugkörper 4a wurde in eine Flugrichtung eingewiesen und fliegt in Richtung zum Ziel 8, ohne dieses jedoch mit seinem Suchkopf erfassen zu können, da das Ziel 8 noch zu weit entfernt ist, ein Sichthindernis 10 zwischen Lenkflugkörper 4a und Ziel 8 liegt und/oder die Sicht in der Atmosphäre durch Trübungen 12 gestört ist. Das Ziel 8 vollzieht Lenkmanöver, die sowohl dem Lenkflugkörper 4a als auch einem Kommandostand 14, der einen Start des Lenkflugkörpers 4a veranlasst hat, nicht bekannt sind. Verfolgt der Lenkflugkörper 4a diese Lenkmanöver nicht frühzeitig mit, so kann es sein, dass das Ziel 8 der Erreichbarkeit durch den Lenkflugkörper 4a entflieht und der Lenkflugkörper 4a zu einem späteren Zeitpunkt sein Ziel 8 nicht mehr erreichen kann.

Während des Flugs des Lenkflugkörpers 4a vernetzen sich zwei oder mehr der Luftkampfeinheiten 4 miteinander. Zudem werden zwischen den Luftkampfeinheiten 4 Informationen verteilt, die es dem Lenkflugkörper 4a ermöglichen, den Flugbewegungen des Ziels 8 zu folgen. Die Vernetzung erfolgt durch ein Möglichwerden eines Kommunikationskontakts aufgrund einer dies zulassenden Entfernung und ist im Vorhinein nicht geplant. Auch die Zusammenstellung des Luftkampfsystems 2 kann durch die räumliche Annäherung der Luftkampfeinheiten 4 aneinander bewirkt werden und nicht durch eine Planung im Vorhinein. Wenn eine Vernetzung zwischen zwei oder mehr Luftkampfeinheiten 4 möglich wird und sie von den Luftkampfeinheiten 4 bewilligt wird, erfolgt eine Vernetzung. Wenn ein Vernetzungshindernis auftritt, beispielsweise durch eine zu hoch werdende Entfernung der Luftkampfeinheiten 4 voneinander oder durch ein anderes Vernetzungshindernis, endet eine bestehende Vernetzung. Die Zusammenstellung des Luftkampfsystems 2 erfolgt durch eine Vernetzung der Luftkampfeinheiten 4 miteinander, sodass sich die Zusammenstellung des Luftkampfsystems 2 entsprechend der sich verändernden Vernetzungen untereinander mit verändert. Das Luftkampfsystem 2 kann auch nur eine einzige Luftkampfeinheit 4 enthalten.

Bei dem in FIG 1 gezeigten Ausführungsbeispiel wird dem Ziel 8 das Anfliegen des Lenkflugkörpers 4a mitgeteilt und das Ziel 8 beginnt eine großräumige Ausweichbewegung. Oder das Ziel 8 vollzieht erratische oder vorbestimmte großräumige Ausweichbewegungen, die eine Begegnung des Lenkflugkörpers 4a mit dem Ziel 8 verhindern. Selbst wenn dem Kommandostand 14 diese Informationen vorlägen, beispielsweise durch den Satelliten 4c, der eine freie Sicht auf das Ziel 8 hat, ist der Lenkflugkörper 4a außerhalb einer Kommunikationsreichweite zum Kommandostand 14, wie in FIG 1 angedeutet ist. Dieser Nachteil kann durch eine Vernetzung von Luftkampfeinheiten 4 untereinander innerhalb des Luftkampfsystems 2 vermieden werden, wie im Folgenden ausgeführt ist.

FIG 2 zeigt eine schematische Darstellung einer Luftkampfeinheit 4, beispielsweise des Lenkflugkörpers 4a, wobei auch andere Luftkampfeinheiten 4 denkbar sind. Die Luftkampfeinheit 4 kann generell und unabhängig von den Ausführungsbeispielen ein unbemanntes Fluggerät sein, wie der Lenkflugkörper 4a oder eine Drohne, oder ein bemanntes Fluggerät, ein Boden- oder Seefahrzeug, eine Kommando- und/oder Kommunikationszentrale, ein Gefechtsstand, eine Aufklärungseinheit und/oder ein Radar. Je nach Luftkampfeinheit 4 ist diese mit unterschiedlichen Dateneinheiten 16 ausgestattet. Beim Ausführungsbeispiel aus FIG 2 enthält der Lenkflugkörper 4a mehrere Dateneinheiten 16, wie einen Suchkopf 16a, einen Detektor 16b, eine Bildauswertung 16c, eine Navigationseinheit 16d, eine Flugsteuerung 16e und eine Fernkommunikationseinheit 16f. Weiter enthält der Lenkflugkörper 4a eine zentrale Steuereinheit 18 und ein Systemnetzwerk 20, das die Dateneinheiten 16 und die zentrale Steuereinheit 18 miteinander vernetzt. Die Vernetzung durch das Systemnetzwerk 20 ist im Ausführungsbeispiel aus FIG 2 generalisiert dargestellt und nicht auf einen Lenkflugkörper 4a beschränkt. So kann das Systemnetzwerk 20 eine zentrale Vernetzung 22 aufweisen, wie zwischen der zentralen Steuereinheit 18 und den Dateneinheiten 16 a-c. Und/oder das Systemnetzwerk 20 verfügt über ein Bussystem 24, das die zentrale Steuereinheit 18 mit den Dateneinheiten 16 d-f vernetzt. Die Aufteilung der Dateneinheiten 16 zu den Vernetzungsarten ist in FIG 2 nur beispielhaft gewählt, um verschiedene Vernetzungsarten darzustellen. Die Luftkampfeinheit 4 ist durch die Vernetzung der zentralen Steuereinheit 18 mit den Dateneinheiten 16 durch das Systemnetzwerk 20 und/oder der Dateneinheiten 16 untereinander voll einsatzfähig, also voll funktionsfähig, und damit in der Lage, ihr jeweils an die Luftkampfeinheit 4 angepasstes Kampfziel zu erreichen.

Zusätzlich zum Systemnetzwerk 20 ist in der Luftkampfeinheit 4 ein Datenpoolnetzwerk 26a vorhanden, mit dem mehrere oder alle der Dateneinheiten 16 der Luftkampfeinheit 4 miteinander vernetzt sind. Das Datenpoolnetzwerk 26a umfasst einen Datenkern 28, der mit allen vernetzten Dateneinheiten 16 in Datenverbindung steht, insbesondere jeweils über eine Datenleitung. In der Datenverbindung ist jeweils eine Koppeleinheit 30 angeordnet, sodass jede Dateneinheit 16 über eine Koppeleinheit 30 mit dem Datenkern 28 verbunden ist. Hierbei kann jede Dateneinheit 16 über genau eine Koppeleinheit 30 mit dem Datenkern 28 verbunden sein. Es ist auch möglich, dass die Datenverbindung mehrerer Dateneinheiten 16, insbesondere gleichartiger Dateneinheiten 16, über eine einzige Koppeleinheit 30 zum Datenkern 28 läuft. Beim Ausführungsbeispiel aus FIG 2 sind die Dateneinheiten 16a-d jeweils über genau eine Koppeleinheit 30a-d mit dem Datenkern 28 datentechnisch verbunden. Die Dateneinheiten 16e,f sind zwar über das Bussystem 24 mit dem Datenkern 28 datentechnisch verbunden, die Daten von Dateneinheit 16e laufen jedoch über die Koppeleinheit 30e zum Datenkern 28 und die Daten von Dateneinheit 16f laufen über die Koppeleinheit 30f zum Datenkern 28, wobei die Koppeleinheiten 30e,f an das Bussystem 24 angeschlossen sind. Der Datenkern 28 führt das Management der Koppeleinheiten 30 im Datenpoolnetzwerk 26a aus, koordiniert die Kommunikation im Datenpoolnetzwerk 26a zwischen mehreren Dateneinheiten 16 und/oder registriert neue Dateneinheiten 16 im Datenpoolnetzwerk 26a. Die neuen Dateneinheiten 16 können Dateneinheiten 16 innerhalb der Luftkampfeinheit 4 sein oder Teil einer anderen Luftkampfeinheit 4.

Zur besseren Unterscheidung sind in FIG 2 die Datenverbindungen des Systemnetzwerks 20 mit durchgezogenen Linien gezeichnet und die Datenverbindungen des Datenpoolnetzwerks 26a in gepunkteten, gestrichelten oder strichpunktierten Linien. Die unterbrochenen Linienarten geben symbolisch die Datenart an. Die Datenart kann das Datenprotokoll, physikalisch Einheiten und/oder Bezugsgrößen der Daten und verschiedenes mehr umfassen. Die Dateneinheiten 16a-c senden in einer gleichen Datenart, unter anderem ist also das Datenprotokoll identisch. Deren Koppeleinheiten 30a-c wandeln diese Datenart in eine einheitliche Datenpooldatenart um, also unter anderem in ein einheitliches Datenpoolprotokoll, was in FIG 2 durch identische Strichlierung von den Koppeleinheiten 30a-f zum Datenkern 28 gekennzeichnet ist. Die Datenarten von der Steuereinheit 18, dem Bussystem 24 und der Dateneinheit 16d sind verschieden von der Datenart der Dateneinheiten 16a-c, was durch die verschiedene Strichlierung bzw. Punktierung gekennzeichnet ist. Alle Datenarten werden durch die Koppeleinheiten 30 in die einheitliche Datenpooldatenart umgewandelt.

Für eine Datenverbindung von einer Koppeleinheit 30 zu ihrer Dateneinheit 16 gibt es verschiedene Möglichkeiten, die in FIG 2 exemplarisch in einer Luftkampfeinheit 4 anhand deren Dateneinheiten 16 dargestellt sind. Diese Darstellungen und Beschreibungen sind lediglich beispielhaft für die verschiedenen Datenverbindungen, sodass die Kombinationen von Datenverbindung und Dateneinheit 16 frei wählbar sind. Beim Suchkopf 16a ist in der physischen Datenverbindung zwischen Suchkopf 16a und zentraler Steuereinheit 18 eine Datenweiche 32 eingefügt. Daten des Systemnetzwerks 20 von und zum Suchkopf 16a werden dort abgegriffen und zur Koppeleinheit 30a geleitet, ohne dass dadurch der Datenverkehr des Systemnetzwerks 20 von und zum Suchkopf 16a beeinträchtigt wird. Daten von der Koppeleinheit 30a zum Suchkopf 16a werden in der Datenweiche 32 in die Datenverbindung eingefügt. Ein Datenverkehr von der zentralen Steuereinheit 18 zur Koppeleinheit 30a oder in die andere Richtung ist nicht möglich. Alternativ kann ein solcher Datenverkehr von der Koppeleinheit 30a gesteuert werden.

Die Datenverbindung vom Detektor 16b zu seiner Koppeleinheit 30b ist lediglich passiv. Der Datenverkehr in der Datenverbindung zwischen Detektor 16b und Steuereinheit 18 wird lediglich durch einen Datenabgriff 34 abgegriffen. Ein Einspeisen von Daten in die Datenverbindung zwischen Detektor 16b und Steuereinheit 18 ist nicht möglich. Die Koppeleinheit 30b kann somit lediglich lesen aber nicht schreiben. Die Bildauswertung 16c hat einen physische Schnittstelle 36 sowohl von und zur Steuereinheit 18 als auch zu ihrer Koppeleinheit 30c. Da auch eine direkte Datenverbindung zur Navigationseinheit 16d vorhanden ist, ist die Schnittstelle 36 auch für diese Verbindung geeignet. Mehrere Datenverbindungen können über eine einzige Schnittstelle 36 oder über eine Schnittstelleneinheit 38 mit mehreren Schnittstellen, wie zur Navigationseinheit 16d gezeigt ist, laufen. Die Datenverbindungen von und zur Navigationseinheit 16d laufen über mehrere Schnittstellen der Schnittstelleneinheit 38, wobei eine der Schnittstellen einzig für die Verbindung zum Datenpoolnetzwerk 26a, also zur Koppeleinheit 30d, zur Verfügung steht. Die Flugsteuerung 16e und die Fernkommunikationseinheit 16f sind über das Bussystem 24 mit der zentralen Steuereinheit 18 verbunden. Auch deren Koppeleinheiten 30e,f sind datentechnisch mit dem Bussystem 24 verbunden, wobei dennoch für jede der Dateneinheiten 16e,f eine eigene Koppeleinheit 30e,f zur Verfügung steht. Die zentrale Steuereinheit 18 kann ebenfalls mit dem Datenpoolnetzwerk 26a datentechnisch verbunden sein, zweckmäßigerweise ebenfalls über eine nur der Steuereinheit 18 zugeordneten Koppeleinheit 30g. Ist in der Luftkampfeinheit 4 lediglich ein Bussystem 24 zur Verbindung aller Dateneinheiten 16 vorhanden, so kann ein Datenweiche oder ein Datenabgriff, analog zur Datenweiche 32 oder dem Datenabgriff 34 in der Datenverbindung zwischen der Steuereinheit 18 und dem Bussystem 24 vorhanden sein. Oder die Steuereinheit 18 ist mit einer Schnittstelle zur Verbindung mit dem Datenpoolnetzwerk 26a ausgestattet.

Der Datenverkehr zwischen den Koppeleinheiten 30 und deren Dateneinheiten 16 lässt den Datenverkehr im Systemnetzwerk 20 vollständig unbeeinträchtigt. Dadurch bleibt die Sicherheit des Betriebs der Luftkampfeinheit 4 von den Aktivitäten im Datenpoolnetzwerk 26a unberührt. Das heißt nicht, dass der Datenverkehr im Systemnetzwerk 20 vollständig unverändert bleibt, lediglich eine Beeinträchtigung, also eine unerwünschte Veränderung wird verhindert.

Eine Beeinträchtigung des Datenverkehrs im Systemnetzwerk 20 kann auftreten, wenn der Datenverkehr in seiner Bandbreite verringert wird, beispielsweise, weil weitere Daten im Systemnetzwerk 20 transferiert werden. Um eine solche Beeinträchtigung auszuschließen, kann es sinnvoll sein, wenn die vom Datenpoolnetzwerk 26a an eine Dateneinheit 16 gegebenen Daten niedriger priorisiert sind als die aus dem Systemnetzwerk 20 an die Dateneinheit 16 gegebenen Daten. Die Priorisierung der Daten kann vom Datenkern 28 vorgenommen werden. Höher priorisierte Daten werden bevorzugt transferiert, sodass deren Transport nicht durch die Daten niedrigerer Priorität beeinträchtigt wird. Für die Priorisierung kann vom Datenkern 28 eine Bandbreite oder Latenz einer Datenverbindung erfasst werden, und eine Priorisierung eines Datenversands kann die Bandbreite bzw. Latenz einbeziehen. Dies ist insbesondere wichtig, wenn zwei Datenpoolnetzwerke 26a von zwei verschiedenen Luftkampfeinheiten 4 miteinander Daten austauschen.

Um einen Einbau eines Datenpoolnetzwerks 26a in eine bestehende und einsatzfähige Luftkampfeinheit 4 zu erleichtern, ist es sinnvoll, wenn zumindest eine der Koppeleinheiten 30 in Form einer Hardwareschnittstelle in einer Datenverbindung zwischen der Dateneinheit 16 und dem Systemnetzwerk 20 angeordnet ist. Sowohl die Datenweiche 32 als auch der Datenabgriff 34, die Schnittstelle 36 und die Schnittstelleneinheit 38 können solche Hardwareschnittstellen sein, durch die das Datenpoolnetzwerk 26a leicht mit der betreffenden Dateneinheit 16 verbunden werden kann. Generell können alle Koppeleinheiten 30 mit einer Hardwareschnittstelle mit ihrer Dateneinheit 16 verbunden sein. Zudem sind die Koppeleinheiten 30 und der Datenkern 28 in Form einer gegenständlich zusammengefassten Einheit 40 in der Luftkampfeinheit 4 angeordnet sind, wie in FIG 2 durch das gestrichelte Rechteck angedeutet ist. Die Einheit 40 hat ein Gehäuse, das die Koppeleinheiten 30 und den Datenkern 28 umgibt und Schnittstellen zur Verbindung mit den betreffenden Dateneinheiten 16 und ggf. der zentralen Steuereinheit 18.

Während des Betriebs der Luftkampfeinheit 4 werden Daten des Systemnetzwerks 20 in das Datenpoolnetzwerk 26a eingebracht. Den Koppeleinheiten 30 kann der gesamte Datenverkehr innerhalb des Systemnetzwerks 20 zur Verfügung stehen oder nur der Teil, der von und zu den beteiligten Dateneinheiten 16 fließt. Ob diese Daten im Datenpoolnetzwerk 26a verwendet werden, entscheidet der Datenkern 28. Liegt beispielsweise eine Klassifizierung zur Geheimhaltung bei Daten vor, so kann die Weitergabe dieser Daten zu Dateneinheiten 16 vom Datenkern 28 unterbunden werden. Die zur Weitergabe zur Verfügung stehenden Daten bilden den Informationsraum, der dem Datenpoolnetzwerk 26a und damit dem Datenkern 28 zur Verfügung steht. Stehen im Systemnetzwerk 20 Daten zur Verfügung, die für eine Dateneinheit 16 nützlich sind, dieser Dateneinheit 16 jedoch im Betrieb der Luftkampfeinheit 4 ohne das Datenpoolnetzwerk 26a nicht zur Verfügung stehen, so können diese Daten der Dateneinheit 16 über das Datenpoolnetzwerk 26a zur Verfügung gestellt werden. Die Datenzuteilung wird vom Datenkern 28 durchgeführt, der die Daten über die betreffende Koppeleinheit 30 der Dateneinheit 16 zur Verfügung stellt. Dazu ist dem Datenkern 28 bekannt, welche Dateneinheit 16 welche Daten zur Verfügung stellen kann und welche Dateneinheit 16 welche Daten brauchen kann. Die Informationen, welche Dateneinheit 16 welche Daten zur Verfügung stellen kann und welche Dateneinheit 16 welche Daten brauchen kann, kann im Datenkern 28 hinterlegt sein. Besser ist es jedoch, wenn diese Informationen zumindest teilweise aus den Koppeleinheiten 30 kommen. Jede der Koppeleinheiten 30 kann so an ihre Dateneinheit 16 angepasst sein, dass ihr bekannt ist, welche Daten ihre Dateneinheit 16 erzeugen kann. Die erzeugbaren Daten sind in der Regel weit mehr, als die Daten, die in einer Mission tatsächlich erzeugt werden. Die Informationen, welche Daten erzeugbar sind, kann sie an den Datenkern 28 geben, dem somit Kenntnis über den maximalen Informationsraum zur Verfügung steht. Dem Datenkern 28 wiederum können Anfragen zu benötigten Daten zugestellt werden, sodass der Datenkern 28 diese Anfragen befriedigen kann, wenn die angefragten Daten im maximalen Informationsraum liegen. Eine solche Anfrage kann von einer Koppeleinheit 30 kommen, der bekannt ist, dass ihre Dateneinheit diese Daten brauchen kann, oder von einer anderen Luftkampfeinheit 4, die diese Daten brauchen kann, und die mit dem Datenpoolnetzwerk 26a verbunden ist, beispielsweise über eine Fernkommunikationseinheit 16f.

Es können mit dem Datenpoolnetzwerk 26a auch Daten erzeugt und zur Verfügung gestellt werden, die im Systemnetzwerk 20 alleine nicht erzeugt werden würden. Hierfür kann der Datenkern 28 Datenanfragen an eine Dateneinheit 16 stellen, die daraufhin diese zusätzlichen Daten erzeugt und die dem Datenkern 28 zugeleitet werden. Ist die Dateneinheit 16 beispielsweise ein Suchkopf 16a und schaut in Richtung zum Ziel 8, so kann der Suchkopf 16a durch eine Anfrage des Datenkerns 28 kurzzeitig in eine andere Richtung schauen und dort vielleicht ein anderes Ziel identifizieren, das für eine andere Luftkampfeinheit 4 interessant ist. Solche Daten wären ohne das Datenpoolnetzwerk 26a nicht erzeugt worden und bilden den über den normalen Informationsraum hinausgehenden maximalen Informationsraum.

Bei dem in FIG 1 dargestellten Ausführungsbeispiel liegt zwischen dem Lenkflugkörper 4a und dem Ziel 8 eine atmosphärische Trübung 12, beispielsweise eine Haufenwolke oder ein lokal begrenztes Wolkengebiet. Die von der Navigationseinheit 16d gesteuerte Flugroute des Lenkflugkörpers 4a ist derart, dass der Lenkflugkörper 4a die Trübung 12 durchfliegt und danach Sicht auf das Ziel 8 bekommen könnte. Der Detektor 16b sei in der Lage, die Trübung 12 als solche zu erkennen und auch ihre lokale Lage in der Atmosphäre. Nun wäre diese Information für die Navigationseinheit 16d wertvoll, um den Lenkflugkörper 4a um die Trübung 12 herumzusteuern, damit der Lenkflugkörper 4a früher Sicht auf das Ziel 8 bekommt. In der Konfiguration des Systemnetzwerks 20 besteht keine Routine, die diese zusätzliche Information verarbeitet und ein Umsteuern des Lenkflugkörpers 4a veranlasst. Die Koppeleinheit 30c erkennt jedoch aus den Daten der Bildauswertung 16c die Trübung 12 und gibt diese an den Datenkern 28 weiter. Der Datenkern 28 beauftragt eine als Datenfusion ausgeführte Dateneinheit, die Teil des Lenkflugkörpers 4a sein kann oder in einer anderen Luftkampfeinheit 4 liegt, die navigatorische Relevanz der Trübung 12 in Bezug auf die Sichtbarkeit des Ziels 8 zu bestimmen. Ist die Relevanz hoch, so gibt der Datenkern 28 diese Information über die Koppeleinheit 30d an die Navigationseinheit 16d, die daraufhin das Umsteuern des Lenkflugkörpers 4a um die Trübung 12 herum veranlasst. Auch kann die navigatorische Relevanz der Trübung 12 in Bezug auf die Sichtbarkeit des Ziels 8 ergeben, dass Lenkflugkörper 4a und Ziel 8 sich vermutlich innerhalb der Trübung 12 begegnen, sodass eine Zielauffassung für den Lenkflugkörper 4a schwierig ist. Je nach Lage der Trübung kann nun der Datenkern 28 über die Navigationseinheit 16d und/oder die Flugsteuerung 16e eine Änderung des Flugs veranlassen, beispielsweise ein Abbremsen, Beschleunigen oder Lenken in eine Zone mit vermutlich größerer Sicht. Auf diese Weise kann die Luftkampfeinheit 4, beispielsweise der Lenkflugkörper 4a, aus dem zur Verfügung stehenden Informationsraum Informationen verwenden, die ohne das Datenpoolnetzwerk 26a ungenutzt blieben.

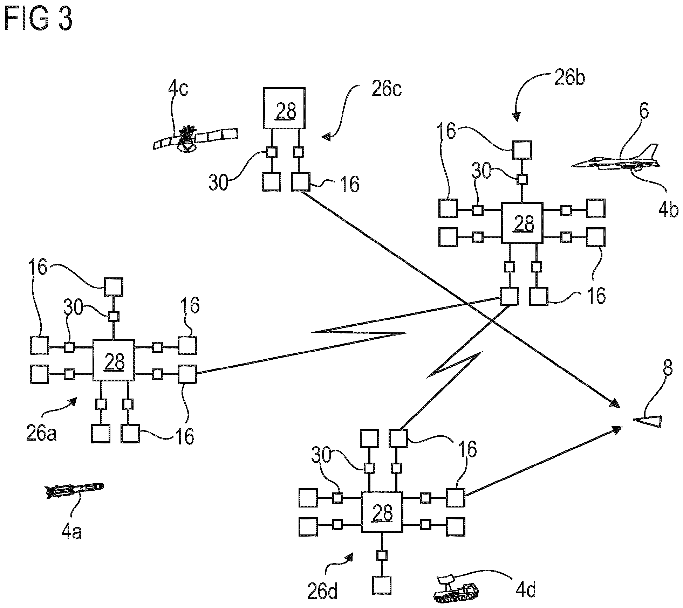

Bei dem in FIG 1 dargestellten Ausführungsbeispiel kann das Hauptproblem jedoch in der hohen Agilität des Ziels 8 bestehen, sodass ein Ausweichen des Ziels 8 problematisch ist. Die durch das Datenpoolnetzwerk 26a zur Verfügung stehende Lösung dieses Problems wird anhand der Darstellung aus FIG 3 erläutert.

FIG 3 zeigt die Luftkampfeinheiten 4a-d, die jeweils über ein eigenes Datenpoolnetzwerk 26a-d verfügen. Zur leichteren Zuordnung der Datenpoolnetzwerke 26a-d sind die Luftkampfeinheiten 4a-d jeweils neben ihrem Datenpoolnetzwerk 26a-d dargestellt. Die Datenpoolnetzwerke 26a-d können aufgebaut sein, wie zum Datenpoolnetzwerk 26a beschrieben ist. Sie verfügen alle über einen Datenkern 28, wobei die Datenkerne 28 in FIG 3 alle nur mit der Bezugsziffer 28 versehen sind und auf Bezugsbuchstaben der Einfachheit halber verzichtet wurde. Gleichermaßen wird auch mit den Dateneinheiten 16 und Koppeleinheiten 30 verfahren, die auch der Einfachheit halber nur mit Bezugsziffern versehen sind. Die Datenpoolnetzwerke 26a-d sind alle verschieden, sowohl in Anzahl als auch in Art der Dateneinheiten 16 und zugehörigen Koppeleinheiten 30 und an die jeweilige Luftkampfeinheit 4 angepasst. Dateneinheiten 16 und Koppeleinheiten 30 sind in FIG 3 nur exemplarisch mit Bezugszeichen versehen.

Während des Flugs des Lenkflugkörpers 4a sucht dessen Fernkommunikationseinheit 16f Kommunikationskontakt mit anderen Luftkampfeinheiten 4, die in der Umgebung sind, um sich mit diesen zu vernetzen. Die Vernetzung wird gebildet, sobald diese möglich ist und erlaubt wird. Auf diese Weise vernetzt sich die Fernkommunikationseinheit 16f mit einer als Fernkommunikationseinheit ausgeführten Dateneinheit 16 des Lenkflugkörpers 4b des Flugzeugs 6. Die Möglichkeit des Kommunikationskontakts und deren Latenz oder Bandbreite wird von beiden Fernkommunikationseinheiten 16f jeweils an ihren Datenkern 28 gegeben, die die Kommunikation erlauben und eine Vernetzung initiieren. Eine solche Vernetzung kann der Lenkflugkörper 4a auch mit dem Satelliten 4c durchführen, dem die Position des Ziels 8 durch freie Sicht auf das Ziel 8 bekannt ist, wie in FIG 3 durch den Pfeil zwischen Satellit 4c und Ziel 8 angedeutet ist, sodass dessen Ausweichbewegung ebenfalls bekannt ist. Diese Daten können über den Datenkern 28 des Lenkflugkörpers 4a der Navigationseinheit 16d zur Verfügung gestellt werden, die den Flug des Lenkflugkörpers 4a an die Ausweichbewegung anpasst.

Für den Fall, dass die Ausweichbewegung bereits so weit fortgeschritten ist, dass der Lenkflugkörper 4a das Ziel 8 nicht mehr erreichen kann, wie durch eine als Datenfusion ausgeführte Dateneinheit des Lenkflugkörpers 4a festgestellt werden kann, so kann diese Information an den Lenkflugkörper 4b weitergegeben werden. Ist der Lenkflugkörper 4b innerhalb einer Bekämpfungsreichweite zum Ziel 8, so kann nun der Lenkflugkörper 4b die Bekämpfung des Ziels 8 übernehmen, der hierfür mit dem Flugzeug 6 vernetzt ist, dessen Pilot aufgrund der Information den Lenkflugkörper 4b startet.

In einer anderen Variante werden die großräumigen Ausweichmanöver des Ziels 8 von einem Radar 4d erkannt, das aber aufgrund von Kommunikationshindernissen nicht in einem Kommunikationskontakt mit dem Lenkflugkörper 4a steht. Allerdings besteht Kommunikationskontakt zwischen dem Radar 4d und dem Lenkflugkörper 4b des Flugzeugs 6. Und zudem besteht Kommunikationskontakt zwischen dem Lenkflugkörper 4b des Flugzeugs 6 und dem Lenkflugkörper 4a. Das Datenpoolnetzwerk 26b des Lenkflugkörpers 4b kann nun als Relaisstation für die Kommunikation zwischen Radar 4d und Lenkflugkörper 4a verwendet werden. Die Daten des Radars 4d stehen dem Datenpoolnetzwerk 26a des Lenkflugkörpers 4a zur Verfügung, der der Ausweichbewegung nun folgen kann.

Bei dem gezeigten Ausführungsbeispiel in FIG 1 fliegt das Flugzeug 6 so, dass dessen Lenkflugkörper 4b das Ziel 8 nicht sehen kann. Fliegt das Flugzeug 6 jedoch anders herum, so kann der Lenkflugkörper 4b das Ziel 8 selbständig auffassen, sodass die Positionsdaten des Ziels 8 auch ohne das Radar 4d vorliegen. Es kann nun entschieden werden, welcher Lenkflugkörper 4a,b das Ziel 8 bekämpft. In einem anderen Szenario ist die grobe Position des Ziels 8 durch den Satelliten 4c bekannt. Auch ist bekannt, dass der Lenkflugkörper 4b das Ziel 8 erkennen müsste, wenn er anders ausgerichtet wäre. Mit dieser Information kann das Flugzeug 6 veranlasst werden, seine Flugrichtung zu ändern, sodass dessen Lenkflugkörper 4b das Ziel 8 auffassen und bekämpfen kann, falls das vorteilhaft ist.

Bei einer Vernetzung mehrerer Luftkampfeinheiten 4 miteinander können viele zusätzliche Daten verteilt werden oder zusätzlich erzeugt werden. Um beispielsweise genauere Daten über die Trübung 12 zu erhalten, kann eine als Sensor-Fusion ausgeführte Dateneinheit, die innerhalb des Luftkampfsystems 2 zur Verfügung steht, beispielsweise in einem Kommandostand 14, aufgefordert werden, die Rohdaten aus dem Radar 4d neu zu verarbeiten, sodass die Struktur der Trübung 12 besser erkannt wird. Diese hierdurch erzeugten Daten hätte das Radar 4d von sich aus nicht erzeugt. Sie werden erst durch die Anfrage einer Dateneinheit 16 oder eines Datenkerns 28 innerhalb des Luftkampfsystems 2 erzeugt, die oder der die Problematik der Trübung 12 erkannt hat und die entsprechende Anfrage an die Sensor-Fusion stellt und zudem veranlasst wird, dass der Sensor-Fusion die Rohdaten vom Radar 4d zur Verfügung gestellt werden.

Bei allen Beispielen werden Daten und Möglichkeiten erzeugt, die im Luftkampfsystem 2 ohne dessen Datenpoolnetzwerke 26a-d nicht verteilt würden oder sogar nicht zur Verfügung stünden. Durch die Vernetzung der Datenpoolnetzwerke 26a-d untereinander wird der momentan verfügbare Informationsraum des Luftkampfsystems 2 für alle Luftkampfeinheiten 4 zur Verfügung gestellt werden. Durch das Anfordern zusätzlicher Daten, wie durch das Umdrehen des Flugzeugs 6 oder das Schauen des Suchkopfs 16a in eine andere Richtung, verfügt das Luftkampfsystem 2 über zusätzliche Daten, die den verfügbaren Informationsraum zum maximalen Informationsraum vergrößern. Eine Bekämpfung des Ziels 8 kann hierdurch mit sehr großer Zuverlässigkeit erfolgen.

### Bezugszeichenliste

- 2: Luftkampfsystem
- 4: Luftkampfeinheit
- 4a: Lenkflugkörper
- 4b: Lenkflugkörper
- 4c: Satellit
- 4d: Radar
- 6: Flugzeug
- 8: Ziel
- 10: Sichthindernis
- 12: Trübung
- 14: Kommandostand
- 16: Dateneinheit
- 16a: Suchkopf
- 16b: Detektor
- 16c: Bildauswertung
- 16d: Navigationseinheit
- 16e: Flugsteuerung
- 16f: Fernkommunikationseinheit
- 18: Steuereinheit
- 20: Systemnetzwerk
- 22: zentrale Vernetzung
- 24: Bussystem
- 26a-d: Datenpoolnetzwerk
- 28: Datenkern
- 30: Koppeleinheit
- 30a-g: Koppeleinheit
- 32: Datenweiche
- 34: Datenabgriff
- 36: Schnittstelle
- 38: Schnittstelleneinheit
- 40: Einheit

## Patentansprüche

1. Verfahren zum Betrieb eines Luftkampfsystems (2), bei dem in einer einsatzfähigen Luftkampfeinheit (4, 4a-d) mehrere Dateneinheiten (16, 16a-f) über ein Systemnetzwerk (20) miteinander verbunden sind,
**dadurch gekennzeichnet,**
**dass** mehrere Koppeleinheiten (30, 30a-g) eines zum Systemnetzwerk (20) zusätzlichen Datenpoolnetzwerks (26a-d) jeweils zumindest eine Dateneinheit (16, 16a-f) mit einem Datenkern (28) des Datenpoolnetzwerks (26a-d) verbinden.

2. Verfahren nach Anspruch 1,
**dadurch gekennzeichnet,**
**dass** die Einsatzfähigkeit der Luftkampfeinheit (4, 4a-d) durch den Datenaustausch im Systemnetzwerk (20) vorhanden ist und das Datenpoolnetzwerk (26a-d) zusätzliche und ergänzende Daten an zumindest eine Dateneinheit (16, 16a-f) liefert.

3. Verfahren nach Anspruch 1 oder 2,
**dadurch gekennzeichnet,**
**dass** zumindest eine der Koppeleinheiten (30, 30a-g) in einer Datenverbindung zwischen ihrer Dateneinheit (16, 16a-f) und dem Systemnetzwerk (20) angeordnet ist und Daten von der Dateneinheit (16, 16a-f) ins Systemnetzwerk (20) unverändert durchleitet und in die Datenverbindung Daten zur Dateneinheit (16, 16a-f) einspeist.

4. Verfahren nach einem der vorhergehenden Ansprüche,
**dadurch gekennzeichnet,**
**dass** einem System aus Datenkern (28), einer Koppeleinheit (30, 30a-g) und ihrer Dateneinheit (16, 16a-f) bekannt ist, welche Daten für die Dateneinheit (16, 16a-f) vorteilhaft sind und das System der Dateneinheit (16, 16a-f) diese Daten liefert, wenn sie dem System zur Verfügung stehen.

5. Verfahren nach einem der vorhergehenden Ansprüche,
**dadurch gekennzeichnet,**
**dass** der Datenkern (28) das Schnittstellenmanagement im Datenpoolnetzwerk (26a-d) ausführt, die Kommunikation im Datenpoolnetzwerk (26a-d) zwischen mehreren Dateneinheiten (16, 16a-f) koordiniert und neue Dateneinheiten (16, 16a-f) im Datenpoolnetzwerk (26a-d) registriert.

6. Verfahren nach einem der vorhergehenden Ansprüche,
**dadurch gekennzeichnet,**
**dass** die vom Datenpoolnetzwerk (26a-d) an eine Dateneinheit (16, 16a-f) gegebenen Daten niedriger priorisiert sind als die aus dem Systemnetzwerk (20) an die Dateneinheit (16, 16a-f) gegebenen Daten.

7. Verfahren nach einem der vorhergehenden Ansprüche,
**dadurch gekennzeichnet,**
**dass** die Koppeleinheit (30, 30a-g) zwischen ihrer Dateneinheit (16, 16a-f) und dem Datenkern (28) ausgetauschte Daten anpasst.

8. Verfahren nach einem der vorhergehenden Ansprüche,
**dadurch gekennzeichnet,**
**dass** der Datenkern (28) eingehende Daten auf eine Klassifizierung zur Geheimhaltung prüft und eine Weitergabe von klassifizierten Daten blockiert.

9. Verfahren nach einem der vorhergehenden Ansprüche,
**dadurch gekennzeichnet,**
**dass** das Datenpoolnetzwerk (26a-d) eine Dateneinheit (16, 16a-f) in Form einer Fernkommunikationseinheit (16f) aufweist, die eine Erreichbarkeit einer Fernkommunikationseinheit einer weiteren Luftkampfeinheit (4, 4a-d) des Luftkampfsystems (2) erkennt und sich mit dieser vernetzt, sodass eine Fernkommunikation zwischen beiden Luftkampfeinheiten (4, 4a-d) gebildet wird.

10. Verfahren nach einem der vorhergehenden Ansprüche,
**dadurch gekennzeichnet,**
**dass** eine Fernvernetzung zwischen Datenpoolnetzwerken (26a-d) zweier Luftkampfeinheiten (4, 4a-d) während eines Flugs von zumindest einer der Luftkampfeinheiten (4, 4a-d) veranlasst wird und Daten zwischen den beiden Datenpoolnetzwerken (26a-d) während des Flugs ausgetauscht werden.

11. Verfahren nach einem der vorhergehenden Ansprüche,
**dadurch gekennzeichnet,**
**dass** der Datenkern (28) Daten von einer Dateneinheit (16, 16a-f) an einen Datenkern (28) einer weiteren Luftkampfeinheit (4, 4a-d) weitergibt und dieser die Daten an eine Dateneinheit (16, 16a-f) seines Datenpoolnetzwerks (26a-d) weitergibt.

12. Verfahren nach einem der vorhergehenden Ansprüche,
**dadurch gekennzeichnet,**
**dass** vom Datenkern (28) eine Bandbreite oder Latenz einer Datenverbindung erfasst wird und eine Priorisierung eines Datenversands die Bandbreite bzw. Latenz einbezieht.

13. Luftkampfsystem (2) umfassend eine Luftkampfeinheit (4, 4a-d) mit mehreren Dateneinheiten (16, 16a-f) und einem Systemnetzwerk (20), über das die Dateneinheiten (16, 16a-f) untereinander verbunden sind zur Herstellung der Einsatzfähigkeit der Luftkampfeinheit (4, 4a-d),
**gekennzeichnet**
**durch** ein zum Systemnetzwerk (20) zusätzliches Datenpoolnetzwerk (26a-d) mit einem Datenkern (28) und mehreren Koppeleinheiten (30, 30a-g), über die zumindest jeweils eine Dateneinheit (16, 16a-f) mit dem Datenkern (28) verbunden ist.

14. Luftkampfsystem (2) nach Anspruch 13,
**dadurch gekennzeichnet,**
**dass** zumindest eine der Koppeleinheiten (30, 30a-g) in Form einer Hardwareschnittstelle in einer Datenverbindung zwischen der Dateneinheit (16, 16a-f) und dem Systemnetzwerk (20) angeordnet ist.

15. Luftkampfsystem (2) nach Anspruch 13 oder 14,
**dadurch gekennzeichnet,**
**dass** die Koppeleinheiten (30, 30a-g) mit einer Hardwareschnittstelle der Dateneinheit (16, 16a-f) verbunden sind und die Koppeleinheiten (30, 30a-g) und der Datenkern (28) in Form einer gegenständlich zusammengefassten Einheit in der Luftkampfeinheit (4, 4a-d) angeordnet sind.
